# EUROPEAN PATENT SPECIFICATION

(11) **EP 2 463 740 B1**
(45) Date of publication and mention of the grant of the patent: **11.06.2014**
(21) Application number: 12158736.4
(22) Date of filing: 18.04.2008
(51) Int. Cl.: G05D 16/06

(54) **Improved flow valve port for a gas regulator**
Verbesserter Flussventil-Port für einen Gasregulator
Port amélioré de soupape d'écoulement pour régulateur de gaz

(30) Priority: 20.04.2007 US 913123 P
(43) Date of publication of application: 13.06.2012
(62) Divisional of application: 08746299.0
(73) Proprietor: Fisher Controls International LLC, St. Louis, MO 63136 (US)
(72) Inventor: Quijano, Erik M., Aubrey, TX Texas 76227 (US)
(74) Representative: Bohnenberger, Johannes

(56) References cited:
- EP-A1- 0 277 869
- DE-A1- 3 714 065
- GB-A- 966 346
- US-A- 4 019 531
- US-A- 4 129 145
- US-A- 4 195 656
- US-A- 5 887 853

## Description

### FIELD OF THE INVENTION

The present invention relates to gas regulators, and more particularly, to gas regulators having regulator valves with removable valve ports.

### BACKGROUND

The pressure at which typical gas distribution systems supply gas may vary according to the demands placed on the system, the climate, the source of supply, and/or other factors. However, most end-user facilities equipped with gas appliances such as furnaces, ovens, etc., require the gas to be delivered in accordance with a predetermined pressure, and at or below a maximum capacity of a gas regulator that may be installed in the system. Such gas regulators are implemented into these distribution systems to ensure that the delivered gas meets the requirements of the end-user facilities. Conventional gas regulators generally include a closed-loop control actuator for sensing and controlling the pressure of the delivered gas.

In addition to a closed loop control, some conventional gas regulators include a relief valve. The relief valve is adapted to provide over pressure protection when the regulator or some other component of the fluid distribution system fails, for example. Accordingly, in the event the delivery pressure rises above a predetermined threshold pressure, the relief valve opens to exhaust at least a portion of the gas to the atmosphere, thereby reducing the pressure in the system.

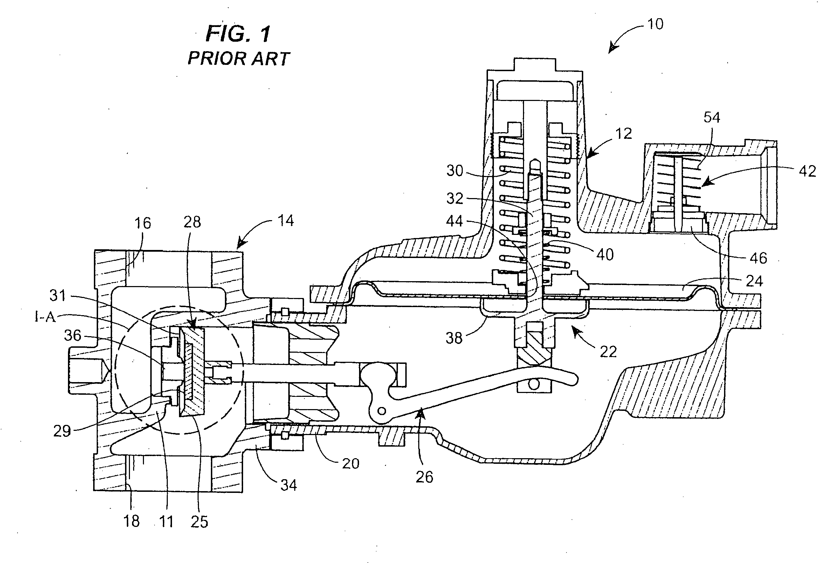

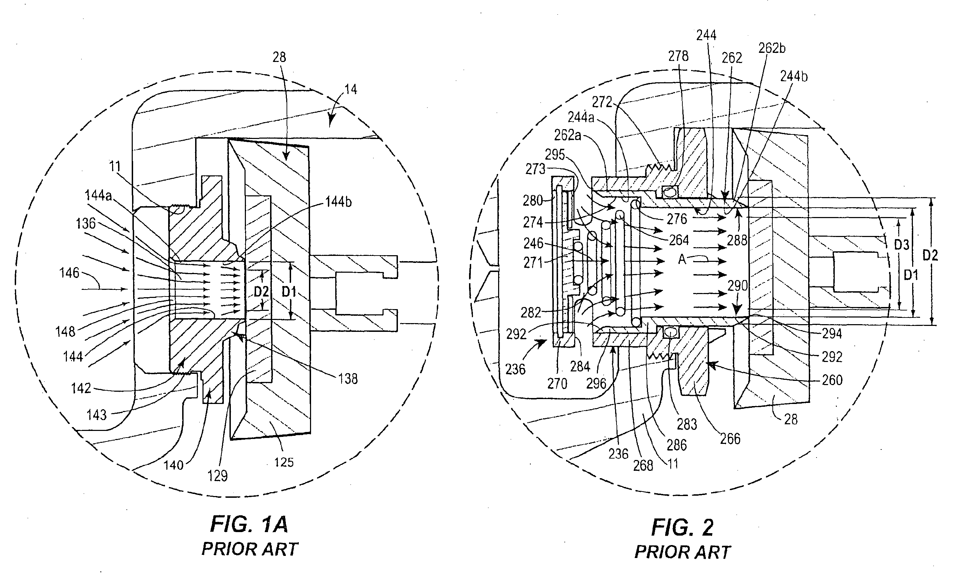

FIG. 1 depicts one conventional gas regulator 10. The regulator 10 generally comprises an actuator 12 and a regulator valve 14. The regulator valve 14 defines an inlet 16, an outlet 18, and a throat 11. The inlet 16 is for receiving gas from a gas distribution system, for example. The outlet 18 is for delivering gas to an end-user facility such as a factory, a restaurant, an apartment building, etc. having one or more appliances, for example. Additionally, the regulator valve 14 includes a valve port 136 carried by the throat 11 and disposed between the inlet 16 and the outlet 18. Gas must pass through the valve port 136 to travel between the inlet 16 and the outlet 18 of the regulator valve 14.

The actuator 12 is coupled to the regulator valve 14 to ensure that the pressure at the outlet 18 of the regulator valve 14, i.e., the outlet pressure, is in accordance with a desired outlet or control pressure. The actuator 12 is therefore in fluid communication with the regulator valve 14 via a valve mouth 34 and an actuator mouth 20. The actuator 12 includes a control assembly 22 for sensing and regulating the outlet pressure of the regulator valve 14. Specifically, the control assembly 22 includes a diaphragm 24, a piston 32, and a control arm 26 having a valve disc 28. The valve disc 28 includes a generally cylindrical body 25 and a sealing insert 29 fixed to the body 25. The diaphragm 24 senses the outlet pressure of the regulator valve 14. The control assembly 22 further includes a control spring 30 in engagement with a top-side of the diaphragm 24 to offset the sensed outlet pressure. Accordingly, the desired outlet pressure, which may also be referred to as the control pressure, is set by the selection of the control spring 30.

The diaphragm 24 is operably coupled to the control arm 26, and therefore the valve disc 28, via the piston 32, and controls the opening of the regulator valve 14 based on the sensed outlet pressure. For example, when an end user operates an appliance, such as a furnace that places a demand on the gas distribution system downstream of the regulator 10, the outlet flow increases, thereby decreasing the outlet pressure. Accordingly, the diaphragm 24 senses this decreased outlet pressure. This allows the control spring 30 to expand and move the piston 32 and the right-side of the control arm 26 downward, relative to the orientation of FIG. 1. This displacement of the control arm 26 moves the valve disc 28 away from the valve port 136 to open the regulator valve 14. So configured, the appliance may draw gas through the valve port 136 toward the outlet 18 of the regulator valve 14, as demand may be required for operation.

FIG. 1A depicts the conventional valve port 136 of the conventional regulator 10 installed within the throat 11 of the regulator valve 14 depicted in FIG. 1. The valve port 136 depicted in FIG. 1A includes a one-piece body having a valve seat 138, a hexagonal nut portion 140, and a body portion 142. The valve seat 138 protrudes from the nut portion 140 and is adapted to be engaged by the valve disc 28 to close the regulator valve 14. The body portion 142 includes a plurality of external threads 143 in threaded engagement with the throat 11 of the regulator valve 14. So configured, the valve port 136 is removable from the regulator valve 14 such that it may be replaced with a different valve port having a different configuration to tailor operational and flow characteristics of the regulator valve 14 to a specific application.

Additionally, the valve port 136 of the conventional embodiment depicted in FIG. 1A defines an elongated orifice 144 for allowing the passage of gas through the regulator valve 14. The orifice 144 is a cylindrical bore of substantially uniform diameter D1 including an inlet 144a and an outlet 144b. The inlet 144a includes a chamfered inner surface 148. So configured, gas flows through the conventional valve port 136 in accordance with a flow path, which may be indicated by flow arrows 146 in FIG. 1A. More particularly, the flow of gas enters the inlet 144a of the orifice 144 and exits the outlet 144b. However, due to basic concepts of fluid dynamics such as the boundary layer effect, the flow of the gas follows the flow arrows 146, which, as illustrated, separate from the sidewalls of the orifice 144 toward the outlet 144b. Thus, the orifice 144 has an effective diameter D2, which is defined by the flow of gas emerging from the outlet 144b. The effective diameter D2 is less than actual diameter D1. Therefore, the maximum potential flow capacity of the orifice 144 and the valve port 136 is not realized.

FIG. 2 depicts an alternative conventional valve port 236, which is adapted to provide both a primary seal and a secondary, or back-up seal. The valve port 236 generally includes a housing 260, a cartridge 262, and a spring 264. The cartridge 262 is slidably disposed within the housing 260 and includes an inlet 262a, an outlet 262b, and an elongated orifice 244. The orifice 244 is generally cylindrical and includes an inlet portion 244a and an outlet portion 244b. In the embodiment depicted in FIG. 2, the inlet portion 244a has a uniform diameter D1 that is slightly larger than a uniform diameter D2 of the outlet portion 244b. Additionally, in the depicted embodiment, the inlet 262a of the cartridge 262 includes a chamfered inner surface 292. The spring 264 biases the cartridge 262 into the position depicted in FIG. 2, which corresponds to the valve port 236 providing the primary seal, as will be described below. So configured, gas flows through the conventional valve port 236 in accordance with a flow path, which may be indicated by flow arrows 246. More particularly, the flow of gas enters the inlet portion 244a of the orifice 244 and exits the outlet portion 244b. However, due to basic concepts of fluid dynamics such as boundary layer separation, the flow of the gas follows the flow arrows 246. Specifically, the gas separates from the sidewalls of the orifice 244 as it reaches the outlet portion 244b of the orifice 244. Thus, the outlet portion 244a of the orifice 244 has an effective diameter D3, which is defined by the flow of gas emerging from the outlet portion 244b. The effective diameter D3 is less than the actual diameter D1. Therefore, similar to the valve port 136 described above with reference to FIG. 1A, the maximum potential flow capacity of the orifice 244 and the valve port 236 is not completely realized.

With continued reference to FIG. 2, the housing 260 includes a hollow, generally cylindrical housing having a hexagonal nut portion 266, a body portion 268, and a curtain portion 270. The body portion 268 includes an internal bore 274 accommodating the cartridge 262. The body portion 268 further includes a plurality of external threads 272 for being threadably coupled into the throat 11 of the regulator valve 14, as depicted. The nut portion 266 of the housing 262 is therefore adapted to be engaged by a tool such as a pneumatic ratchet to install the valve port 236 into the throat 11 of the regulator valve 14. The curtain portion 270 includes a plate 280 spaced from the body portion 268 of the housing 262 by a pair of legs 282. The plate 280 carries a secondary seat 271 including a rubber surface 273, for example. So configured, the curtain portion 270 defines a pair of windows 284 in the housing 260. The windows 284 allow for the flow of gas into the valve port 236 and through the regulator valve 14.

Accordingly, during a normal operational condition, the outlet 262b of the cartridge 262 serves as a primary seat and is adapted to be engaged by the valve disc 28 of the control assembly 22 to stop the flow of fluid through the regulator valve 14. However, in the event that debris or some other type of foreign material becomes lodged between the valve disc 28 and the outlet 262b of the cartridge 262 when the valve disc 28 attempts to seal against the cartridge 262, the primary seal fails to stop the flow of gas through the valve port 236. Thus, the pressure downstream of the regulator 10, i.e., the outlet pressure, increases. This increase in pressure is sensed by the diaphragm 24 which further causes the valve disc 28 to be forced toward the valve port 236. This force eventually overcomes the force of the spring 264 and displaces the cartridge 262 into the housing 260 such that the inlet 262a engages the rubber surface 273 of the secondary seat 271. So configured, the secondary seat 271 of the housing 260 seals the inlet 262a and blocks the flow of gas through the windows 284 in the housing 260, thereby preventing the flow of gas through the cartridge 262 and the regulator valve 14.

Once a downstream demand is placed back on the system however, the diaphragm 24 senses a decrease in outlet pressure and moves the valve disc 28 away from the valve port 236. The spring 264 biases the cartridge 262 back to the position depicted in FIG. 2 and any debris previously lodged between the valve disc 28 and the outlet 262a of the cartridge 262 releases and flows downstream.

Referring back to FIG. 1 and as mentioned above, the conventional regulator 10 further functions as a relief valve. Specifically, the control assembly 22 includes a relief spring 40 and a release valve 42. The diaphragm 24 includes an opening 44 through a central portion thereof and the piston 32 includes a sealing cup 38. The relief spring 40 is disposed between the piston 32 and the diaphragm 24 to bias the diaphragm 24 against the sealing cup 38 to close the opening 44, during normal operation. Upon the occurrence of a failure such as a break in the control arm 26, for example, the control assembly 22 is no longer in direct control of the valve disc 28 and the flow through the regulator valve 14 moves the valve disc 28 into an extreme open position. This allows a maximum amount of gas to flow into the actuator 12. Thus, as the gas fills the actuator 12, pressure builds against the diaphragm 24 forcing the diaphragm 24 away from the sealing cup 38, thereby exposing the opening 44. The gas therefore flows through the opening 44 in the diaphragm 24 and toward the release valve 42. The release valve 42 includes a valve plug 46 and a release spring 54 biasing the valve plug 46 into a closed position, as depicted in FIG. 1. Upon the pressure within the actuator 12 and adjacent the release valve 42 reaching a predetermined threshold pressure, the valve plug 46 displaces upward against the bias of the release spring 54 and opens, thereby exhausting gas into the atmosphere and reducing the pressure in the regulator 10.

One consideration in selecting a regulator for use in a particular application includes maximizing flow capacity at the set outlet, or control, pressure. However, as discussed above, the orifices 144, 244 of the conventional valve ports 136, 236 discussed above have effective diameters that are less than the respective actual diameters, and therefore, the full potential flow capacities are not realized.

US 4,195,656 (A) discloses a pressure regulator of the spring loaded diaphragm type having a chamber on one side of the diaphragm and provided with an inlet and an outlet separated by a transverse wall into which an orifice device is mounted for stopping the flow of gas through the regulator during excess flow or low outlet pressure conditions. During normal operation, the valve element actuated by the diaphragm will co-act with the valve seat of the orifice device to regulate the throughput flow, while engaging a valve stem of the orifice device to hold the same open. The orifice device has a body through which the valve stem extends. A helical spring interconnects the body and the valve stem by being separately threaded to each component whereby the orifice device is normally biased in a closed position.

### SUMMARY

The present disclosure provides an exemplary regulator and/or a valve port for a regulator. The regulator generally comprises an actuator and a valve body. The actuator includes a moveable valve disc. The valve port is disposed within the valve body. The actuator displaces the valve disc relative to the valve port for controlling the flow of fluid through the valve body. The valve port includes an orifice for allowing the passage of fluid through the valve body.

One aspect of the exemplary valve port may include an orifice including an inlet portion and an outlet portion. The inlet portion may include an inner sidewall that converges from an enlarged inlet aperture toward the outlet portion. So configured, the inlet portion forces the flow of fluid through the valve port to maximize the flow capacity.

In another aspect of the exemplary valve port, the inlet portion of the orifice may include a longitudinal dimension substantially greater than a longitudinal dimension of the outlet portion.

Another aspect of the present disclosure may further include an exemplary valve port comprising a housing and a cartridge slidably disposed within the housing for providing a primary and a secondary seal, wherein the cartridge may define an orifice with an inner sidewall that converges from an enlarged inlet aperture toward an outlet. So configured, the converging sidewall forces the flow of fluid through the valve port to maximize the flow capacity.

### BRIEF DESCRIPTION OF THE DRAWINGS

FIG. 1 is a side cross-sectional view of a conventional regulator including one conventional valve port;
FIG. 1A is a side cross-sectional view of a regulator valve of the regulator of FIG. 1 including the conventional valve port of FIG. 1 and taken from circle I-A of FIG. 1;
FIG. 2 is a side cross-sectional view of another conventional valve port adapted for use with the regulator of FIG. 1;
FIG. 3 is a side cross-sectional view of a regulator including a valve port, the regulator and valve port constructed in accordance with a first embodiment of the present invention;
FIG. 3A is a side cross-sectional view of a regulator valve of the regulator of FIG. 3 illustrating the valve port of the first embodiment of the present invention and taken from circle III-A of FIG. 3;
FIG. 4 is a side cross-sectional view of a valve port constructed in accordance with a second embodiment of the present invention; and
FIG. 5 is a side cross-sectional view of a cartridge for use in a valve port constructed in accordance with a third embodiment of the present invention.

### DETAILED DESCRIPTION

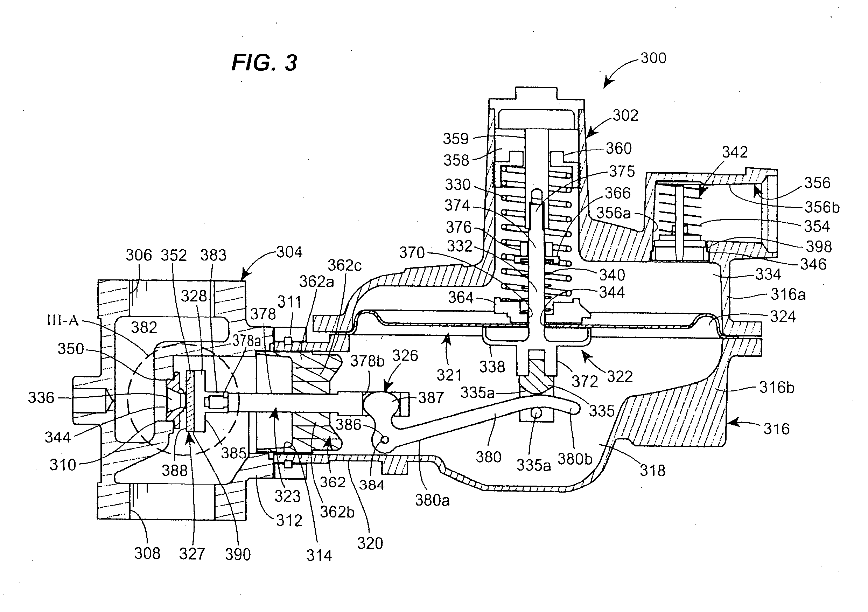

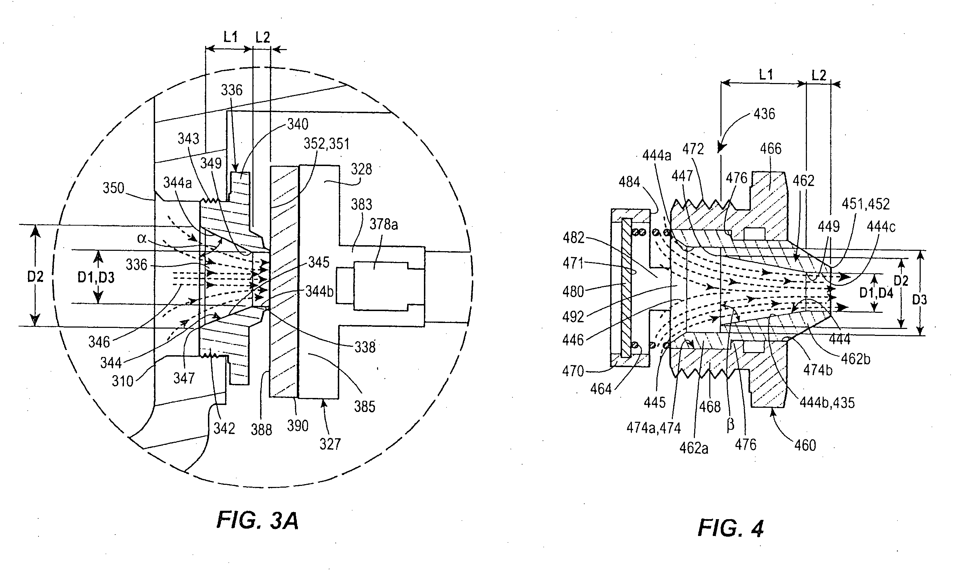

FIG. 3 depicts a gas regulator 300 constructed in accordance with one embodiment of the present invention. The gas regulator 300 generally includes an actuator 302 and a regulator valve 304. The regulator valve 304 includes an inlet 306 for receiving gas from a gas distribution system, for example, and an outlet 308 for delivering gas to a facility having one or more appliances, for example. The actuator 302 is coupled to the regulator valve 304 and includes a control assembly 322 having a control element 327. During a first or normal operational mode, the control assembly 322 senses the pressure at the outlet 308 of the regulator valve 304, i.e., the outlet pressure, and controls a position of the control element 327 such that the outlet pressure approximately equals a predetermined control pressure. Additionally, upon the occurrence of a failure in the system such as a breakage of one of the components of the control assembly 322, the regulator 300 performs a relief function that is generally similar to the relief function described above with reference to the relief valve 42 of the regulator 10 depicted in FIG. 1.

With continued reference to FIG. 3, the regulator valve 304 further includes a throat 310 and a valve mouth 312. The throat 310 is disposed between the inlet 306 and the outlet 308 and accommodates a valve port 336. The valve mouth 312 defines an opening 314 disposed along an axis that is generally perpendicular to an axis of the inlet 306 and outlet 308 of the regulator valve 304. The valve port 336 includes an inlet end 350, an outlet end 352, and an elongated orifice 344 extending between the inlet end 350 and the outlet end 352. Gas must travel through the orifice 344 in the valve port 336 to travel between the inlet 306 and the outlet 308 of the regulator valve 304. The valve port 336 is removable from the regulator valve 304 such that it may be replaced with a different valve port having a different configuration to tailor operational and flow characteristics of the regulator valve 304 to a specific application.

The actuator 302 includes a housing 316 and the control assembly 322, as mentioned above. The housing 316 includes an upper housing component 316a and a lower housing component 316b secured together with a plurality of fasteners (not shown), for example. The lower housing component 316b defines a control cavity 318 and an actuator mouth 320. The actuator mouth 320 is connected to the valve mouth 312 of the regulator valve 304 to provide fluid communication between the actuator 302 and the regulator valve 304. In the disclosed embodiment, the regulator 300 includes a collar 311 securing the mouths 312, 320 together. The upper housing component 316a defines a relief cavity 334 and an exhaust port 356. The upper housing component 316a further defines a tower portion 358 for accommodating a portion of the control assembly 322, as will be described.

The control assembly 322 includes a diaphragm subassembly 321, a disc subassembly 323, and a relief valve 342. The diaphragm subassembly 321 includes a diaphragm 324, a piston 332, a control spring 330, a relief spring 340, a combination spring seat 364, a relief spring seat 366, a control spring seat 360, and a piston guide 359.

More particularly, the diaphragm 324 includes a disc-shaped diaphragm defining an opening 344 through a central portion thereof. The diaphragm 324 is constructed of a flexible, substantially air-tight, material and its periphery is sealingly secured between the upper and lower housing components 316a, 316b of the housing 316. The diaphragm 324 therefore separates the relief cavity 334 from the control cavity 318.

The combination spring seat 364 is disposed on top of the diaphragm 324 and defines an opening 370 positioned concentric with the opening 344 in the diaphragm 324. As depicted in FIG. 3, the combination spring seat 364 supports the control spring 330 and the relief spring 340.

The piston 332 of the disclosed embodiment includes a generally elongated rod-shaped member having a sealing cup portion 338, a yoke 372, a threaded portion 374, and a guide portion 375. The sealing cup portion 338 is concaved and generally disc-shaped and extends circumferentially about a mid-portion of the piston 332, and is located just below the diaphragm 324. The yoke 372 includes a cavity adapted to accommodate a coupler 335 which connects to a portion of the disc subassembly 323 to enable attachment between the diaphragm subassembly 321 and the disc subassembly 323, as will be described.

The guide portion 375 and the threaded portion 374 of the piston 332 are disposed through the openings 344, 370 in the diaphragm 324 and the combination spring seat 364, respectively. The guide portion 375 of the piston 332 is slidably disposed in a cavity in the piston guide 359, which maintains the axial alignment of the piston 332 relative to the remainder of the control assembly 322. The relief spring 340, the relief spring seat 366, and a nut 376, are disposed on the threaded portion 374 of the piston 332. The nut 376 retains the relief spring 340 between the combination spring seat 364 and the relief spring seat 366. The control spring 330 is disposed on top of the combination spring seat 364, as mentioned, and within the tower portion 358 of the upper housing component 316a. The control spring seat 360 is threaded into the tower portion 358 and compresses the control spring 330 against the combination spring seat 364.

In the disclosed embodiment, the control spring 330 and the relief spring 340 include compression coil springs. Accordingly, the control spring 330 is grounded against the upper housing component 316a and applies a downward force to the combination spring seat 364 and the diaphragm 324. The relief spring 340 is grounded against the combination spring seat 364 and applies an upward force to the relief spring seat 366, which in turn is applied to the piston 332. In the disclosed embodiment, the force generated by the control spring 330 is adjustable by adjusting the position of the control spring seat 360 in the tower portion 358, and therefore the control pressure of the regulator 300 is also adjustable.

The control spring 330 acts against the pressure in the control cavity 318, which is sensed by the diaphragm 324. As stated, this pressure is the same pressure as that which exists at the outlet 308 of the regulator valve 304. Accordingly, the force applied by the control spring 330 sets the outlet pressure to a desired, or control pressure for the regulator 300. The diaphragm subassembly 321 is operably coupled to the disc subassembly 323, as mentioned above, via the yoke 372 of the piston 332 and the coupler 335.

The disc subassembly 323 includes a control arm 326 and a stem guide 362. The control ann 326 includes a stem 378, a lever 380, and the control element 327. The control element 327 of the disclosed embodiment includes a valve disc 328 with a seating surface 388. The stem 378, the lever 380, and the valve disc 328 are constructed separately and assembled to form the control arm 326. Specifically, the stem 378 is a generally linear rod having a nose 378a and a recess 378b, which in the disclosed embodiment is generally rectangular. The lever 380 is a slightly curved rod and includes a fulcrum end 380a and a free end 380b. The fulcrum end 380a includes an aperture 384 receiving a pivot pin 386 carried by the lower housing component 316b. The fulcrum end 380a also includes a knuckle 387 having an elliptical cross-section and disposed within the recess 378b of the stem 378. The free end 380b is received between a top portion 335a and a pin 335b of the coupler 335 that is attached to the yoke 372 of the piston 332. Thus, the coupler 335 operably connects the disc subassembly 323 to the diaphragm subassembly 321.

The stem guide 362 includes a generally cylindrical outer portion 362a, a generally cylindrical inner portion 362b, and a plurality of radial webs 362c connecting the inner and outer portions 362b, 362a. The outer portion 362a of the stem guide 362 is sized and configured to fit within the mouths 312, 320 of the regulator valve 304 and lower housing component 316b. The inner portion 362b is sized and configured to slidably retain the stem portion 378 of the control arm 326. Thus, the stem guide 362 serves to maintain the alignment of the regulator valve 304, the actuator housing 316, and the control assembly 322, and more particularly, the stem 378 of the control arm 326 of the control assembly 322.

FIG. 3 depicts the control assembly 322 in a normally operational closed position, where there is no demand placed on the system downstream of the regulator 300. Therefore, the seating surface 388 of the valve disc 328 sealingly engages the outlet end 352 of the valve port 336. So configured, gas does not flow through the valve port 336. This configuration is achieved because the outlet pressure, which corresponds to the pressure in the control cavity 318 of the housing 316 and sensed by the diaphragm 324, is greater than the force applied by the control spring 330. Accordingly, the outlet pressure forces the diaphragm 324, the piston 332, and the valve disc 328 into the closed position depicted.

However, in the event that an operating demand is placed on the system, e.g., a user begins operating an appliance such as a furnace, a stove, etc., the appliance draws gas from the control cavity 318 of the regulator 300, thereby reducing the pressure that is sensed by the diaphragm 324. As the pressure sensed by the diaphragm 324 decreases, a force imbalance occurs between a control spring force and an outlet pressure force on the diaphragm 324 such that the control spring 330 expands and displaces the diaphragm 324 and piston 332 downward, relative to the housing 316. This causes the lever 380 to pivot in the clockwise direction about the pivot pin 386, which, in turn, rotates the knuckle 387 relative to the recess 378b in the stem 378. This moves the valve disc 328 away from the outlet end 352 of the valve port 336 to open the regulator valve 304. So configured, the gas distribution system is able to deliver gas to the downstream appliance through the regulator valve 304 at a control pressure that is set by the control spring 330. Additionally, the diaphragm subassembly 321 continues to sense the outlet pressure of the regulator valve 304. As long as the outlet pressure remains approximately equal to the control pressure, the control assembly 322 will balance the valve disc 328 in an open position away from the outlet end 352 of the valve port 336.

For example, if the outlet flow increases, i.e., the demand increases, the outlet pressure will decrease below the control pressure. The diaphragm senses the decrease in outlet pressure and the spring 330 expands and moves the diaphragm 324 and piston 332 downward to move the valve disc 328 away from the valve port 336 and further open the regulator valve 304. Alternatively, however, if the outlet flow decreases, i.e., the demand decreases, the outlet pressure will increase above the control pressure set by the control spring 330. Therefore, the diaphragm 324 senses the increased outlet pressure and moves upward against the bias of the control spring 330 to move the valve disc 328 back toward the valve port 336. Accordingly, in the event that the downstream demand completely stops, gas will continue to flow through the regulator valve 304 and increase the downstream pressure sufficiently to move the valve disc 328 into engagement with the outlet end 352 of the valve port 336, as depicted.

FIG. 3A depicts the valve port 336 of FIG. 3, which is constructed in accordance with one embodiment of the present invention. The valve port 336 includes a one-piece body similar to the conventional valve port 136 described above with reference to FIG. 1A. The valve port 336 includes a valve seat 338, a hexagonal nut portion 340, and a body portion 342. The valve seat 338 protrudes from the nut portion 340 and is adapted to be engaged by the seating surface 388 of the valve disc 328 to close the regulator valve 304 and prevent the flow of gas through the regulator 300, as depicted in FIG. 3. The body portion 342 includes a plurality of external threads 343 in threaded engagement with the throat 310 of the regulator valve 304. The hexagonal nut portion 340 is adapted to be engaged by a tool such as a pneumatic ratchet, for example, to install the valve port 336 into the regulator valve 304. Additionally, as depicted, the valve port 336 defines the elongated orifice 344 for allowing the passage of gas through the regulator valve 304, as mentioned above. Accordingly, the valve port 336 is removable from the regulator valve 304 such that it may be replaced with a different valve port having a different configuration to tailor operational and flow characteristics of the regulator valve 304 to a specific application.

The orifice 344 of the valve port 336 of the embodiment depicted in FIG. 3A defines an inlet aperture 347, a transition aperture 349, an outlet aperture 351, an inlet portion 344a, and an outlet portion 344b. The inlet aperture 347 is disposed proximate to the inlet end 350 of the valve port 336 and the outlet aperture 351 is disposed proximate to the outlet end 352 of the valve port 336. The inlet portion 344a extends between the inlet aperture 347 and the transition aperture 349. The outlet portion 344b extends between the transition aperture 349 and the outlet aperture 351. In the disclosed embodiment, the inlet, transition, and outlet apertures 347, 349, 351 can have circular cross-sections. The transition and outlet apertures 349, 351 have a common diameter D1. Therefore, the outlet portion 344b of the orifice 344 includes a generally uniform diameter D1 that is equal to the diameter D1 of the transition and outlet apertures 349, 351.

The inlet aperture 347 of the disclosed embodiment, however, has a diameter D2 that is larger than the diameter D1 of the transition and outlet apertures 349, 351. Therefore, the inlet portion 344a of the disclosed embodiment includes a sidewall 345 that generally uniformly converges from the inlet aperture 347 to the transition aperture 349. Therefore, in one embodiment, the sidewall 335 of the inlet portion 344a can be a frustoconical, or a tapered, sidewall. In the disclosed embodiment, the sidewall 345 may converge at an angle α that is between approximately 15° and approximately 75°, and at least in one embodiment, approximately 45°.

Additionally, in the disclosed embodiment, the diameter D2 of the inlet aperture 347 may be between approximately 10% and approximately 150% larger than the diameter D1 of the transition and outlet apertures 349, 351. Further still, the inlet portion 344a of the disclosed embodiment constitutes a majority of the length of the orifice 344. For example, the inlet portion 344a includes a longitudinal dimension L I that is larger than a longitudinal dimension L2 of the outlet portion 344b. In one embodiment, the longitudinal dimension L1 of the inlet portion 344a may be between approximately 10% and approximately 150% larger than the longitudinal dimension of the outlet portion 344b, and at least in one embodiment, approximately 100% larger.

In alternative embodiments, however, the diameters of the inlet, transition, and outlet apertures 347, 349, 351 may not be limited to the ranges provided above. In still further alternative embodiments, the inlet and outlet portions 344a, 344b may be configured such that the longitudinal dimension L1 of the inlet portion 344a may be equal to or smaller than the longitudinal dimension L2 of the outlet portion 344b. Regardless of the specific arrangement, the orifice 344 of the present embodiment maximizes the flow capacity of the valve port 336 by minimizing the detrimental effects of basic fluid dynamics such as boundary layer fluid separation.

For example, the valve port 336 of the present embodiment advantageously directs gas flowing through the regulator valve 304 along a flow path, which may be indicated by flow arrows 346 in FIG. 3A. More particularly, the flow of gas enters the increased diameter D2 of the inlet aperture 347 of the orifice 344. As the gas flows through the inlet portion 344a, the convergent sidewall 345 directs the gas to conform with the dimensions of the transition aperture 349 and the outlet portion 344b of the orifice 344. This direction advantageously increases the pressure of the gas within the outlet portion 344b and thereby reduces the effects of boundary layer fluid separation adjacent to the sidewalls of the outlet portion 344b and maximizes the capacity of the valve port 336. Accordingly, the valve port 336 of the present embodiment includes an effective diameter D3, which is defined by the diameter of the flow of gas emerging from the outlet portion 344b of the orifice 344. The effective diameter D3 is substantially equal to the diameter D1 of the outlet portion 344b and the full potential of the flow capacity of the valve port 336 is approximately realized.

FIG. 4 depicts another embodiment of a valve port 436 constructed in accordance with the principles of the present invention for being installed within the throat 310 of the regulator valve 304 of FIG. 3. The valve port 436 depicted in FIG. 4 is similar to the conventional valve port 236 described above with reference to FIG. 2 in that it is configured to provide a primary seal and a secondary, or back-up, seal. The valve port 436 generally includes a housing 460, a cartridge 462, and a spring 464. The cartridge 462 is slidably disposed within the housing 460 and includes an inlet end 462a, an outlet end 462b, and an elongated orifice 444 extending between the inlet end 462a and the outlet end 462b. The spring 464 biases the cartridge 462 into a first position depicted in FIG. 4, which corresponds to a position for providing the primary seal.

The housing 460 includes a generally cylindrical housing having a hexagonal nut portion 466, a body portion 468, and a curtain portion 470. The nut portion 466 and the body portion 468 cooperatively, or in combination, define an internal cavity 474 accommodating the cartridge 462. Generally, the cavity 474 includes a first portion 474a and a second portion 474b. The diameter of the first portion 474a is smaller than the diameter of the second portion 474b in the embodiment of the valve port 436 depicted in FIG. 4. Additionally, the body portion 468 includes a plurality of external threads 472 for being threadably coupled into the throat 3 10 of the regulator valve 304. The nut portion 466 of the housing 460 is therefore adapted to be engaged by a tool such as a pneumatic ratchet to install the valve port 436 into the regulator valve 304. Accordingly, the valve port 436 is removable from the regulator valve 304 such that it may be replaced with a different valve port having a different configuration to tailor operational flow characteristics of the regulator valve 304 to a specific application.

The first portion 474a of the cavity 474 slidably accommodates the inlet end 462a of the cartridge 462, and the second portion 474b slidably accommodates the oulet end 462b of the cartridge 462, as depicted. A step 476 disposed between the first and second portions 474a, 474b limits displacement of the cartridge 462 away from the curtain portion 470 of the housing 460. The curtain portion 470 includes a plate 480 spaced from the body portion 468 of the housing 460 by a pair of legs 482, only one of which is depicted in FIG. 4 due to the cross-sectional nature of the illustration. The plate 480 of the disclosed embodiment includes a solid circular plate that serves as a spring seat 471. So configured, the curtain portion 470 defines a pair of windows 484 in the housing 460 for allowing gas to flow into the valve port 436.

As mentioned, the cartridge 462 includes an inlet end 462a, an outlet end 462b, and an elongated orifice 444 extending between the inlet end 462a and the outlet end 462b. The orifice 444 defines a receiving aperture 445, an inlet aperture 447, a transition aperture 449, and an outlet aperture 451. The receiving and inlet apertures 445, 447 are disposed proximate to the inlet end 462a of the cartridge 462, and the transition and outlet apertures 449, 451 are disposed proximate to the outlet end 462b of the cartridge 462. So configured, the orifice 444 includes a receiving portion 444a, an inlet portion 444b, and an outlet portion 444c. The receiving aperture 445 is disposed adjacent to the inlet end 462a of the valve port. The outlet aperture 451 is disposed adjacent to the outlet end 462b of the valve port 436. In the disclosed embodiment, each of the apertures 445, 447, 449, 451 have circular cross-sections. The outlet and transition apertures 451, 449 share a common diameter D1. The inlet aperture 447 has a diameter D2. The receiving aperture 445 has a diameter D3. In the disclosed embodiment, the diameter D2 of the inlet aperture 447 is larger than the diameter D1 of both the outlet and transition apertures 451, 449. Additionally, the diameter D3 of the receiving aperture 445 is larger than the diameter D2 of the inlet aperture 447.

The receiving portion 444a is generally uniformly cylindrical and extends between the receiving aperture 445 and the inlet aperture 447. Additionally, the receiving portion 444c of the disclosed embodiment defines a chamfered inner surface 492 disposed adjacent to the receiving aperture 445. Similarly, the outlet portion 444c extends between the transition aperture 449 and the outlet aperture 451, and therefore, is also generally cylindrical. The inlet portion 444b extends between the inlet aperture 447 and the transition aperture 449. As mentioned above, the diameter D2 of the inlet aperture 447 is larger than the diameter D1 of the transition aperture 449, and therefore, the inlet portion 444b of the orifice 444 includes a sidewall 435 that converges from the inlet aperture 447 toward the transition aperture 449. In the disclosed embodiment, the inlet portion 444b generally uniformly converges at an angle β of between approximately 15° and approximately 85°, and at least in one embodiment, approximately 75°. In one embodiment, the sidewall 435 of the inlet portion 444b can be frustoconical, or generally tapered, for example. Furthermore, in the disclosed embodiment, the diameter D2 of the inlet aperture 447 may be between approximately 10% and approximately 150% larger than the diameter D1 of the transition aperture 449. However, alternative embodiments may not be limited to such a range of relative dimensions and/or angles.

Further still, as depicted in FIG. 4, the inlet portion 444b of the orifice 444 includes a longitudinal dimension L1 that is larger than a longitudinal dimension L2 of the outlet portion 444c. In one embodiment, the longitudinal dimension L1 of the inlet portion 444b may be between approximately 10% and approximately 150% larger than the longitudinal dimension L2 of the outlet portion 444c, and at least in one embodiment, approximately 100% larger. However, alternative embodiments may be configured such that the longitudinal dimension L1 of the inlet portion 444b may be equal to or smaller than a longitudinal dimension L2 of the outlet portion 444c. Regardless of the specific arrangement, the orifice 444 of the embodiment of the valve port 436 disclosed in FIG. 4 maximizes flow capacity through the cartridge 462 by minimizing the effects of boundary layer fluid dynamics.

For example, similar to that which was described above with reference to the valve port 336 depicted in FIG. 3, the valve port 436 of the present embodiment advantageously directs gas flowing through the regulator valve 304 along a flow path, which may be indicated by flow arrows 446 in FIG. 4. More particularly, the flow of gas enters the receiving portion 444a of the orifice 444 of the cartridge 462, the diameter D3 of which is larger than the diameter of the remainder of the orifice 444, in the disclosed embodiment. As the gas flows through the receiving portion 444a, it is directed into the inlet portion 444b, via the inlet aperture 447. The convergent sidewall 435 of the inlet portion 444b directs the gas to closely conform to the dimensions of the transition aperture 449 and the outlet portion 444c of the orifice 444. This direction advantageously increases the pressure of the gas flowing through the outlet portion 444c and thereby reduces the effects of boundary layer fluid separation adjacent to the sidewalls of the outlet portion 444c and maximizes the capacity of the valve port 436.

Accordingly, the valve port 436 of the present embodiment includes an effective diameter D4, which is defined by the diameter of the flow of gas emerging from the outlet portion 444b of the orifice 444. The effective diameter D4 is substantially equal to the diameter D1 of the transition and outlet apertures 449, 451 and the outlet portion 444c of the orifice 444.

Similar to the conventional valve port 236 described above with reference to FIG. 2, during a normal operational condition, the outlet end 462b of the cartridge 462 serves as a primary seat and is adapted to be engaged by the valve disc 328 of the control assembly 322 depicted in FIG. 3, for example, to stop the flow of fluid through the regulator valve 304. However, in the event that debris or some other type of foreign material becomes lodged between the valve disc 328 and the outlet end 462b of the cartridge 462, the primary seal fails to stop the flow of gas through the valve port 436. Thus, gas continues to flow through the regulator valve 304 and the pressure downstream of the regulator 10, i.e., the outlet pressure, increases. This increase in pressure is sensed by the diaphragm 324 which further causes the valve disc 328 to be forced toward the valve port 436. This force eventually overcomes the force of the spring 464 and displaces the cartridge 462 into the housing 460 such that the inlet end 462a engages the secondary seat 471. So configured, the secondary seat 471 of the housing 460 seals the inlet end 462a and blocks the flow of gas through the windows 484 in the housing 460, thereby preventing the flow of gas through the orifice 444 in the cartridge 462 and the regulator valve 304.

Once a downstream demand is placed back on the system however, the diaphragm 324 senses a decrease in outlet pressure and moves the valve disc 328 away from the valve port 436. The spring 464 biases the cartridge 462 back to the position depicted in FIG. 4 and any debris previously lodged between the valve disc 328 and the outlet end 462a of the cartridge 462 releases and flows downstream.

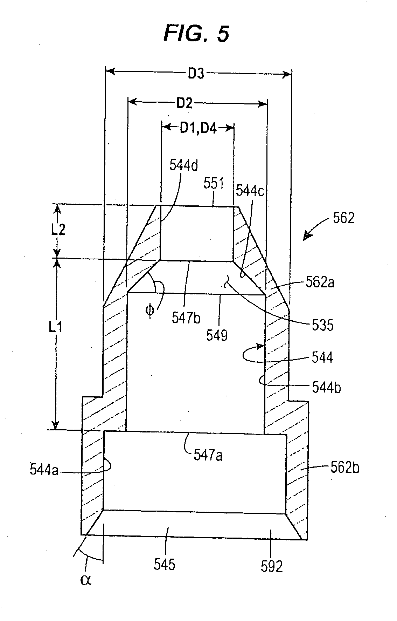

In light of the foregoing, it should be appreciated that the present invention provides a valve port 336, 436 defining an orifice 344, 444 for maximizing the flow capacity of the valve port 336, 436. For example, the valve ports 336, 436 include orifices 344, 444 that function as nozzles to compress the flow of gas at respective outlet portions thereof to reduce the effects of boundary layer separation and maximize the flow capacity of the valve ports. While various embodiments of the of valve ports having orifices of various geometrical cross-sections have thus far been described, alternative embodiments having different geometries are intended to be within the scope of the present invention. For example, FIG. 5 depicts an alternative cartridge 562 adapted for use with the valve port 436 described above with reference to FIG. 4.

Similar to the cartridge 462 described above, the cartridge 562 depicted in FIG. 5 includes an inlet end 562a, an outlet end 562b, and an elongated orifice 544 extending between the inlet end 562a and the outlet end 562b. The orifice 544 defines a receiving aperture 545, a first transition aperture 547a, an inlet aperture 549, a second transition aperture 547b, and an outlet aperture 551. The receiving, first transition, and inlet apertures 545, 547a, 549 are disposed proximate to the inlet end 526a of the cartridge 562, when compared to the second transition and outlet apertures 547b, 551, which are disposed proximate to the outlet end 562b of the cartridge 562. Additionally, the orifice 544 includes a receiving portion 544a, a transition portion 544b, an inlet portion 544c, and an outlet portion 544d. The receiving portion 544a of the embodiment of the cartridge 562 depicted in FIG. 5 also includes an inner chamfered surface 592 disposed adjacent to the receiving aperture 545.

Each of the apertures 545, 547a, 547b, 549, 551 have circular cross-sections. The outlet aperture 551 and the second transition aperture 547b share a common diameter D1. The inlet aperture 549 and the first transition aperture 547a have a common diameter D2. The receiving aperture 545 has a diameter D3. In the disclosed embodiment, the diameter D2 of the inlet aperture 549 is larger than the diameter D1 of the outlet aperture 551 and the second transition aperture 547b. Additionally, the diameter D3 of the receiving aperture 545 is larger than the diameter D2 of the inlet aperture 549.

The receiving portion 544a of the orifice 544 is generally uniformly cylindrical and extends between the receiving aperture 545 and the first transition aperture 547a. Similarly, the transition portion 544b of the orifice 544 is generally uniformly cylindrical and extends between the first transition aperture 547a and the inlet aperture 549. Moreover, the outlet portion 544d of the orifice extends between the second transition aperture 547b and the outlet aperture 551, and therefore, is also generally cylindrical.

In contrast, the inlet portion 544c extends between the inlet aperture 549 and the second transition aperture 547b. As stated above, the diameter D1 of the second transition aperture 547b is smaller than the diameter D2 of the inlet aperture 549. Accordingly, the inlet portion 544c includes a sidewall 535 that generally uniformly converges from the inlet aperture 549 toward the second transition aperture 547b. Therefore, in the disclosed embodiment, the sidewall 535 of the inlet portion 544c can be considered a frustoconical, or tapered, sidewall that converged at an angle ϕ of between approximately 15° and approximately 85°, and at least in one embodiment, approximately 45°. Furthermore, in one embodiment, the diameter D2 of the inlet aperture 549 may be between approximately 10% and approximately 150% larger than the diameter D1 of the second transition aperture 547b and the outlet portion 544d of the orifice 544, and at least in one embodiment, approximately 50% larger. However, alternative embodiments may not be limited to such a range of relative dimensions and/or angles.

Further still, as depicted in FIG. 5, a longitudinal dimension L1 of the transition portion 544b and the inlet portion 544c combined is larger than a longitudinal dimension L2 of the outlet portion 544d. In one embodiment, the longitudinal dimension L1 may be between approximately 10% and approximately 300% larger than the longitudinal dimension L2, and at least in one embodiment, approximately 200% larger. However, alternative embodiments may be configured such that the longitudinal dimension L1 may be equal to or smaller than the longitudinal dimension L2. Regardless of the specific arrangement, the orifice 544 of the embodiment of the cartridge 563 disclosed in FIG. 5 provides the same advantages as the cartridge 462 depicted in FIG. 4.

Specifically, the cartridge 562 of the present embodiment includes an effective diameter D4, which is defined by the diameter of the flow of gas emerging from the outlet portion 544d of the orifice 544. The effective diameter D4 is substantially equal to the diameter D1 of the outlet aperture 551 and the outlet portion 544d of the orifice 544. Accordingly, the orifice 544 of the present embodiment advantageously maximizes the flow capacity of the cartridge 562 by offsetting the effects of boundary layer fluid separation otherwise present in conventional valve ports.

As stated above, the present invention is not intended to be limited to the examples provided herein. Alternative embodiments may include additional features to help increase flow capacity or other performance characteristics of a valve port constructed in accordance with the principles of the present invention. For example, one alternative embodiment of the valve port 336 described above with reference to FIG. 3A may include a bull-nosed, or rounded, transition between the inlet portion 344a and the outlet portion 344b of the orifice 344. Such a bull-nosed transition may further assist the valve body in decreasing the effects of boundary layer separation. The same concept could also be applied to any of the transitions between the different portions of the orifices 444, 544 of the cartridges 462, 562 described with reference to FIGS. 4 and 5.

Furthermore, while the cartridges 462, 562 have been disclosed as including chamfered inner surface 492, 592 disposed adjacent to the respective receiving apertures 435, 535, alternative embodiments may not include chamfered surface or alternatively, may include bull-nosed surfaces, for example, for helping reduce the effects of boundary layer fluid separation. Nevertheless, in the embodiment disclosed as having chamfered inner surfaces 492, 592, such chamfered inner surfaces 492, 592 may be disposed at an angle y, as depicted in FIG. 5, for example, that is between approximately 5° and approximately 75°, and at least in one embodiment approximately 30°. Still further embodiments may include chamfered inner surfaces that do not fall within this prescribed range of angles.

Further yet, while the valve ports 336, 436 of the embodiments disclosed herein have been described as having orifices 344, 444, 544 that are generally circular in cross-section, alternative embodiments may not be so limited. For example, in alternative embodiments, the orifices may have square, rectangular, or some other geometrical cross-section capable of serving the principles of the present invention.

Finally, while the various converging inlet portions 344a, 444b, 544c of the valve ports 336, 436 have been disclosed herein as including generally frustoconical sidewalls 335, 435, 535, in alternative embodiments, the converging inlet portions 344a, 444b, 544c can include convex radiused profiles, for example. Such convex radiused profiles could resemble bullnosed surfaces in one embodiment. Thus, the terms converge, converging, and/or convergent, as used in the present description, are intended to describe one or more geometries that taper, move, draw, or come together. It should be appreciated that these terms are not limited to the linearly converging frustoconical geometries expressly depicted herein, but rather, are intended to include any geometry separated by orifices of different dimensions. In one embodiment, the converging geometry could even include a plurality of steps.

Thus, the regulators and valve ports described herein are merely examples of fluid control devices incorporating the principles of the present invention. Other fluid control devices such as control valves may also benefit from the structures and/or advantages of the present invention.

## Claims

1. A valve port (336, 436) comprising:
a body portion (342, 468) including a plurality of external threads (343, 472);
a nut portion (340, 466);
a primary valve seat (338, 462, 562) protruding from the nut portion (340, 466) and adapted to be engaged by a control element (328) when the control element (328) is in a closed position to prevent the flow of fluid through a valve body;
an inlet aperture (347, 447, 549) which is disposed proximate to an inlet end (3350, 462a, 562a) of the valve port (336, 436), an outlet aperture (351, 451, 551) which is disposed proximate to an outlet end (352, 462b; 562b) of the valve port (336, 436), a transition aperture (349, 449, 547b), and an elongated orifice (344, 444, 544) extending between the inlet aperture (347, 447, 549) and the outlet aperture (351, 451, 551) and defining an inlet portion (344a, 444b, 544c) and an outlet portion (344b, 444c, 544d), wherein the inlet portion (344a, 444b, 544c) extends between the inlet aperture (347, 447, 549) and the transition aperture (349, 449, 547b) and the outlet portion (344b, 444c, 544d) extends between the transition aperture (349, 449, 547b) and the outlet aperture (351, 451, 551), and wherein the transition aperture (349, 449, 547b) and the outlet aperture (351, 451, 551) have a common diameter (D1),
**characterized in that**
the elongated orifice (344, 444, 544) comprising a frustoconical portion which is defined by a sidewall (335, 435, 535) of the inlet portion (344a, 444b, 544c) which substantially uniformly converges from the inlet aperture (347, 447, 549) to the transition aperture (349, 449, 547b), thereby enabling fluid to flow through the valve port (336) in a manner that reduces boundary layer separation and maximizes flow capacity, and **in that**
a longitudinal dimension (L1) of the inlet portion (344a, 444b, 544c) is larger than a longitudinal dimension (L2) of the outlet portion (344b, 444c, 544d), such that the frustoconical portion comprises a majority of the elongated orifice (344, 444, 544).

2. The valve port (336, 436) of claim 1, wherein the frustoconical portion converges at an angle in the range of approximately 15° to approximately 85°.

3. The valve port (336, 436) of claim 1, wherein the inlet aperture (347, 447, 549) has a diameter (D2) that is larger than a diameter (D1) of the outlet aperture (351, 451, 551).

4. The valve port (336, 436) of claim 1, wherein the inlet aperture (347, 447, 549) diameter (D2) is in the range of approximately 10% to approximately 150% larger than the outlet aperture diameter (D1).

5. The valve port (336, 436) of claim 1, wherein the valve port (436) comprises a housing (460) and a cartridge (462) slidably disposed in the housing (460), the cartridge (462) defining the primary valve seat, the elongated orifice (444), the valve port inlet (462a), and the valve port outlet (462b).

6. The valve port (436) of claim 5, wherein the housing (460) comprises a secondary valve seat (471) disposed opposite the cartridge (462) from the primary valve seat and the cartridge (462) is slidably disposed in the housing (460) between a primary seating position where the valve port inlet (462a) is spaced from the secondary valve seat (471), and a secondary seating position where the valve port inlet (462a) sealingly engages the secondary valve seat (471).

7. The valve port (436) of claim 6, wherein the housing (460) further comprises at least one window (484) disposed adjacent the secondary seat (471) for allowing the passage of fluid into the elongated orifice (444) when the cartridge (462) is in the primary seating position.

## Patentansprüche

1. Ventilanschluss (336, 436), Folgendes aufweisend:
einen Körperabschnitt (342, 468), der mehrere Außengewindegänge (343, 472) aufweist;
einen Mutterabschnitt (340, 466);
einen primären Ventilsitz (338, 462, 562), der vom Mutterabschnitt (340, 466) vorragt und dazu angepasst ist, von einem Steuerelement (328) in Eingriff genommen zu werden, wenn sich das Steuerelement (328) in einer geschlossenen Stellung befindet, um den Fluiddurchfluss durch einen Ventilkörper zu verhindern;
eine Einlassöffnung (347, 447, 549), die nahe einem Einlassende (350, 462a, 562a) des Ventilanschlusses (336, 436) angeordnet ist, eine Auslassöffnung (351, 451, 551), die nahe einem Auslassende (352, 462b; 562b) des Ventilanschlusses (336, 436) angeordnet ist, eine Übergangsöffnung (349, 449, 547b), und eine langgestreckte Öffnung (344, 444, 544), die sich zwischen der Einlassöffnung (347, 447, 549) und der Auslassöffnung (351, 451, 551) erstreckt und einen Einlassabschnitt (344a, 444b, 544c) und einen Auslassabschnitt (344b, 444c, 544d) definiert, wobei sich der Einlassabschnitt (344a, 444b, 544c) zwischen der Einlassöffnung (347, 447, 549) und der Übergangsöffnung (349, 449, 547b) erstreckt, und sich der Auslassabschnitt (344b, 444c, 544d) zwischen der Übergangsöffnung (349, 449, 547b) und der Auslassöffnung (351, 451, 551) erstreckt, und wobei die Übergangsöffnung (349, 449, 547b) und die Auslassöffnung (351, 451, 551) einen gemeinsamen Durchmesser (D1) haben,
**dadurch gekennzeichnet, dass**
die langgestreckte Öffnung (344, 444, 544) einen kegelstumpfförmigen Abschnitt aufweist, der durch eine Seitenwand (335, 435, 535) des Einlassabschnitts (344a, 444b, 544c) definiert ist, der im Wesentlichen gleichmäßig von der Einlassöffnung (347, 447, 549) zur Übergangsöffnung (349, 449, 547b) konvergiert, wodurch ermöglicht wird, dass Fluid auf eine Weise durch den Ventilanschluss (336) strömen kann, die eine Grenzschichtabtrennung reduziert und eine Durchflusskapazität maximiert, und dass
eine Längsabmessung (L1) des Einlassabschnitts (344a, 444b, 544c) größer ist als eine Längsabmessung (L2) des Auslassabschnitts (344b, 444c, 544d), so dass der kegelstumpfförmige Abschnitt einen Großteil der langgestreckten Öffnung (344, 444, 544) aufweist.

2. Ventilanschluss (336, 436) nach Anspruch 1, wobei der kegelstumpfförmige Abschnitt in einem Winkel im Bereich von ca. 15° bis ca. 85° konvergiert.

3. Ventilanschluss (336, 436) nach Anspruch 1, wobei die Einlassöffnung (347, 447, 549) einen Durchmesser (D2) hat, der größer ist als ein Durchmesser (D1) der Auslassöffnung (351, 451, 551).

4. Ventilanschluss (336, 436) nach Anspruch 1, wobei der Durchmesser (D2) der Einlassöffnung (347, 447, 549) im Bereich von ca. 10% bis ca. 150% größer ist als der Auslassöffnungsdurchmesser (D1).

5. Ventilanschluss (336, 436) nach Anspruch 1, wobei der Ventilanschluss (436) ein Gehäuse (460) und einen Einsatz (462) aufweist, der verschiebbar im Gehäuse (460) angeordnet ist, wobei der Einsatz (462) den primären Ventilsitz, die langgestreckte Öffnung (444), den Ventilanschlusseinlass (462a) und den Ventilanschlussauslass (462b) definiert.

6. Ventilanschluss (436) nach Anspruch 5, wobei das Gehäuse (460) einen sekundären Ventilsitz (471) aufweist, der vom primären Ventilsitz aus gegenüber dem Einsatz (462) angeordnet ist, und der Einsatz (462) im Gehäuse (460) verschiebbar zwischen einer primären Sitzstellung, in welcher der Ventilanschlusseinsatz (462a) vom sekundären Ventilsitz (471) beabstandet ist, und einer sekundären Sitzstellung angeordnet ist, in welcher der Ventilanschlusseinsatz (462a) den sekundären Ventilsitz (471) abdichtend in Eingriff hält.

7. Ventilanschluss (436) nach Anspruch 6, wobei das Gehäuse (460) darüber hinaus mindestens ein Fenster (484) aufweist, das angrenzend an den sekundären Sitz (471) angeordnet ist, um den Fluiddurchtritt in die langgestreckte Öffnung (444) zuzulassen, wenn sich der Einsatz (462) in der primären Sitzstellung befindet.

## Revendications

1. Port de soupape (336, 436) comprenant :
une partie de corps (342, 468) comprenant une multiplicité de filets externes (343, 472) ;
une partie d'écrou (340, 466) ;
un siège de soupape primaire (338, 462, 562), en saillie sur la partie d'écrou (340, 466) et apte à être engagé par un élément de commande (328) lorsque l'élément de commande (328) se trouve dans une position fermée afin d'empêcher l'écoulement de fluide à travers un corps de soupape ;
une ouverture d'entrée (347, 447, 549) qui est disposée à proximité d'une extrémité d'entrée (3350, 462a, 562a) du port de soupape (336, 436), une ouverture de sortie (351, 451, 551) qui est disposée à proximité d'une extrémité de sortie (352, 462b ; 562b) du port de soupape (336, 436), une ouverture de transition (349, 449, 547b), et un orifice allongé (344, 444, 544) s'étendant entre l'ouverture d'entrée (347, 447, 549) et l'ouverture de sortie (351, 451, 551) et définissant une partie d'entrée (344a, 444b, 544c) et une partie de sortie (344b, 444c, 544d), dans lequel la partie d'entrée (344a, 444b, 544c) s'étend entre l'ouverture d'entrée (347, 447, 549) et l'ouverture de transition (349, 449, 547b) et la partie de sortie (344b, 444c, 544d) s'étend entre l'ouverture de transition (349, 449, 547b) et l'ouverture de sortie (351, 451, 551), et dans lequel l'ouverture de transition (349, 449, 547b) et l'ouverture de sortie (351, 451, 551) ont un diamètre commun (D1),
**caractérisé en ce que**
l'orifice allongé (344, 444, 544) comporte une partie tronconique qui est définie par une paroi latérale (335, 435, 535) de la partie d'entrée (344a, 444b, 544c) qui converge de façon sensiblement uniforme depuis l'ouverture d'entrée (347, 447, 549) jusqu'à l'ouverture de transition (349, 449, 547b), permettant ainsi au fluide de s'écouler à travers le port de soupape (336) d'une manière qui réduit la séparation par couche limite et qui maximise la capacité d'écoulement, et **en ce que** une dimension longitudinale (L1) de la partie d'entrée (344a, 444b, 544c) est plus grande qu'une dimension longitudinale (L2) de la partie de sortie (344b, 444c, 544d) de telle manière que la partie tronconique comprenne une majeure partie de l'orifice allongé (344, 444, 544).

2. Port de soupape (336, 436) selon la revendication 1, dans lequel la partie tronconique converge avec un angle compris dans la plage d'approximativement 15 ° à approximativement 85 ° .

3. Port de soupape (336, 436) selon la revendication 1, dans lequel l'ouverture d'entrée (347, 447, 549) a un diamètre (D2) qui est plus grand qu'un diamètre (D1) de l'ouverture de sortie (351, 451, 551).

4. Port de soupape (336, 436) selon la revendication 1, dans lequel l'ouverture d'entrée (347, 447, 549) a un diamètre (D2) qui se situe dans la plage d'approximativement 10 % à approximativement 150 % plus grand que le diamètre de l'ouverture de sortie (D1).

5. Port de soupape (336, 436) selon la revendication 1, dans lequel le port de soupape (436) comprend un boîtier (460) et une cartouche (462) disposée de façon coulissante dans le boîtier (460), la cartouche (462) définissant le siège de soupape primaire, l'orifice allongé (444), l'entrée du port de soupape (462a), et la sortie du port de soupape (462b).

6. Port de soupape (436) selon la revendication 5, dans lequel le boîtier (460) comprend un siège de soupape secondaire (471) disposé en face de la cartouche (462) à partir du siège de soupape primaire et la cartouche (462) est disposée de façon coulissante dans le boîtier (460) entre une position de pose primaire où l'entrée du port de soupape (462a) est espacée du siège de soupape secondaire (471), et une position de pose secondaire où l'entrée du port de soupape (462a) engage de façon étanche le siège de soupape secondaire (471).

7. Port de soupape (436) selon la revendication 6, dans lequel le boîtier (460) comprend en outre au moins une fenêtre (484) disposée à proximité du siège secondaire (471) pour permettre le passage de fluide dans l'orifice allongé (444) lorsque la cartouche (462) se trouve dans la position de pose primaire.
